(19) Europäisches Patentamt
European Patent Office
Office européen des brevets

(11) EP 3 103 352 A1

(12) **EUROPEAN PATENT APPLICATION**

(43) Date of publication:
**14.12.2016 Bulletin 2016/50**

(21) Application number: **15171900.2**

(22) Date of filing: **12.06.2015**

(51) Int Cl.:
***A23L 2/52*** *(2006.01)* ***A23L 5/00*** *(2016.01)*
***A23L 29/212*** *(2016.01)* ***A23L 5/42*** *(2016.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **DSM IP Assets B.V.**
**6411 TE Heerlen (NL)**

(72) Inventor: **The designation of the inventor has not yet been filed**

(74) Representative: **Berg, Katja**
**DSM Nutritional Products Ltd**
**Patent Department**
**Wurmisweg 576**
**4303 Kaiseraugst (CH)**

(54) **ACID STABLE BEVERAGES COMPRISING BIXIN**

(57) The present invention is directed to an acid-stable bixin form, wherein the bixin is microencapsulated, preferably in a matrix of modified food starch. This bixin form can be in the form of an emulsion, a dispersion or in form of an powder.

The present invention is further directed to a process for the manufacture of such forms, as well as to beverages containing them. These yellow-orange to red-orange beverages are physically stable and color stable.

EP 3 103 352 A1

## Description

Traditionally, annatto is widely used as a colorant for dairy, cheese, frozen food, snacks, cereals, savory and oil based products.

Until now there are no viable formulations of bixin available in the market place providing reddish-orange color shades with high tinctorial strength, high coloration efficiency and low taste impact. What is promoted and commercially available are formulations of norbixin (which is the chemically de-esterified fraction of annatto) stabilized by polysorbate providing a bright yellow color. Polysorbates are, however, known to cause foaming issues in beverage manufacturing processes and to impact the sensory profile of the final consumer product in terms of a soapy off-taste. Furthermore, polysorbate based emulsifiers are not associated with naturalness and do not really fit the natural trend for colors used in the food and beverage industry. Polysorbate free norbixin forms are not physically stable at neutral to acid pH and, at alkaline pH provide a bright yellow color. What is also offered are microencapsulated bixin forms such as the CapColor range of Chr. Hansen. The latter, however, only show low color strength.

The annatto based formulations in the preferred embodiment of the current invention are forms of the natural bixin fraction of annatto.

They impart a natural orange to red-orange and, at the same time, show very high coloration efficiency and physical stability over a wide pH range. They do not contain low molecular weight emuslifiers such as polysorbates and the like and are based on modified food starch.

Therefore, these forms give a blend a neutral taste and can be added even at high concentrations without negative impact on the taste profile of the final consumer product. Due to that they can also be used to replace paprika based colors which are often associated with a characteristic off-taste. Furthermore, the bixin formulations in the preferred embodiment of the current invention are fully plant based, vegetarian products that offer a lot of advantages in that respect vs. animal based non-kosher carmine/cochineal based forms that are also used to give orange-reddish shades in beverages. They may also be used in place of nature-identical carotenoids such as apocarotenal or canthaxanthin of which both are also associated to orange-reddish color shades as well.

The present invention is directed to a beverage comprising a bixin form wherein the beverage is physically stable at a pH in the range of from 2 to 5, preferably in the range of from 2.5 to 4, even more preferably in the range of from 2.8 to 3.6. Preferably the beverage is also color stable. Further advantages are that (almost) no ringing and (almost) no precipitation/sedimentation of the bixin in the beverage occurs.

The present invention is further directed to the bixin form itself as well as to its manufacturing process and to the use of such forms for coloring beverages.

There is increasing interest in the food industry to replace artificial materials for coloring foods such as azo dyes and the like with natural or nature identical colorants. Especially wanted are colors that are also animal-free, allergene-free, GMO-free and kosher/halal.

A challenge in replacing artificial colorants with natural colorants in beverages has been in obtaining the stability of color characteristics provided by artificial colorants and to match the color of the product the consumer is already used to. Thus, it is important that a consistent visual quality of the product is guaranteed.

Bixin can be used to impart a yellow-orange to red-orange color shade to beverages. Beverages usually have a pH in the range of from 2 to 5. Surprisingly the color provided by bixin is stable in this pH range meaning that for the first time a stable bixin form has been provided by the present invention which allows a stability over this broad range of pH. Furthermore the bixin form according to the present invention shows high color strength and color saturation. It provides upon re-dispersion in water an E1 /1 value of at least 400, preferably an E1 /1 value in the range of from 500 to 1800.

Until now bixin has been described as unstable compared to its derivative norbixin, which can be obtained from bixin by demethylation (see e.g. GB 1,049,539: page 2, left column, line 40-43) or via a different extraction route of annatto seeds using alkaline pH conditions which causes the deesterification of the naturally occuring bixin. A change in color in a consumer's end-product is, however, irritating for the consumer since it is linked in the personal subjective perception as a sign of bad quality. A further challenge is that bixin - in contrast to norbixin - is not water-soluble as such.

Bixin is especially valuable since it is considered as "natural colorant" according to the NATCOL classification of food colorants. Norbixin, however, is considered only as "nature derived colorant" according to the NATCOL classification of food colorants.

Whereas norbixin gives a bright yellow color shade to beverages the bixin forms of the present invention impart strong and bright yellow-orange to red-orange color shades.

Thus, the present invention is directed to beverages comprising a bixin form, wherein the bixin is microencapsulated, and whereby preferably the average particle size of the inner phase measured by Photon Correlation

Spectroscopy (Beckman Coulter N4 Plus Submicron Particle Sizer) is in the range of from 100 to 400 nm. In such beverages the color shade h is preferably in the range of from 45 to 70 at the CIELAB Color scale. Furthermore, the color value C* is preferably in the range of from 20 to 110 at the CIELAB Color scale.

Beverages comprising a bixin form, wherein the bixin is microencapsulated, and whereby preferably the average particle size of the inner phase when measured in water by Photon Correlation Spectroscopy (Beckman Coulter N4 Plus Submicron Particle Sizer) is in the range of from 100 to 300 nm, show a yellow-orange color shade. The color shade h of such beverage is preferably in the range of from 60 to 70 at the CIELAB Color scale and preferably the color value C* is preferably in the range of from 40 to 110 at the CIELAB Color scale.

Beverages comprising a bixin form, wherein the bixin is microencapsulated, and whereby preferably the average particle size of the inner phase when measured in water by Photon Correlation Spectroscopy (Beckman Coulter N4 Plus Submicron Particle Sizer) is in the range of from 200 to 400 nm, show a red-orange color shade. The color shade h of such beverage is preferably in the range of from 45 to 60 at the CIELAB Color scale and preferably the color value C* is preferably in the range of from 20 to 70 at the CIELAB Color scale.

Thus, it is possible to obtain a broad color range from yellow-orange via orange to red-orange by using bixin in beverages.

Bixin

cis-Bixin (compound of formula below; 9-*cis*-6,6'-diapo-ψ,ψ-carotenedioic acid, 6-methyl ester; 6-methyl hydrogen (9'Z)-6,6'-diapocarotene-6,6'-dioate) can be obtained from a natural source, by fermentation or by chemical synthesis. A natural source might be the seeds of *Bixa orellana* L. Such Annatto Seed Extract is commercially available as "cake" and contains at least 50 weight-%, preferably at least 70 weight-%, more preferably at least 85 weight-% of bixin. Chemical syntheses of bixin or its pre-cursors and derivatives are e.g. described in GB 768,172, GB 756,896, GB 751,573 and GB 744,890.

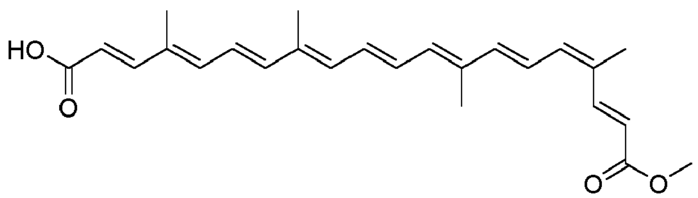

The term "bixin" used herein encompasses the (all-E)-isomer as well as mono-, oligo- or poly-(Z)-isomers. A preferred isomer mixture consists especially essentially of cis-bixin.

Amount of bixin in the beverage

Preferably the amount of bixin in the beverage is in the range of from 1 ppm to 50 ppm, more preferably it is in the range of from 2 ppm to 30 ppm, most preferably it is in the range of from 5 ppm to 25 ppm, based on the total weight of the beverage.

Bixin form

The bixin form may be liquid (an emulsion or a dispersion) or solid (a powder). Its manufacturing process is described in more detail below.

"Bixin form" or "bixin formulation" means that the bixin is encapsulated, especially microencapsulated, i.e. embedded, in a matrix of a hydrocolloid which protects it against degradation and oxidation.

When the bixin form is an emulsion, its water content is preferably in the range of from 45 to 65 weight-%. When the bixin form is a powder, its water content is preferably in the range of from 3 to 7 weight-%.

The powder may be manufactured by drying the emulsion by any method known to the person skilled in the art, e.g. by spray-drying, spray-drying in combination with fluidised bed granulation or by a powder-catch technique, whereby the sprayed emulsion droplets are caught in a bed of an absorbent, such as starch (especially corn starch), and subsequently dried. When the powder-catch technique is applied and corn starch is used as absorbent, its amount in the bixin form is preferably in the range of from 10 to 40 weight-%, more preferably in the range of from 25 to 35 weight-%, based on the total weight of the bixin form.

The amount of the bixin in the bixin form is usually in the range of from 1 to 20 weight-%, preferably in the range of from 2.5 to 15 weight-%, more preferably in the range of from 5 to 10 weight-%, based on the total weight of the bixin form.

When the color of such bixin form is measured at the CIELAB color scale at a concentration of 5 ppm of bixin in water, the color value a* is preferably in the range of from 15 to 25, and the color value b* is preferably in the range of from 10 to 50. The color is then yellow-orange to orange to red-orange. Hereby the average particle size of the inner

phase of the bixin form measured by Photon Correlation Spectroscopy (Beckman Coulter N4 Plus Submicron Particle Sizer) is preferably in the range of from 100 to 400 nm.

When the average particle size of the inner phase of the bixin form measured by Photon Correlation Spectroscopy (Beckman Coulter N4 Plus Submicron Particle Sizer) is in the range of from 100 to 300 nm, the resulting color is yellow-orange. When the bixin form is dissolved in water, so that the amount of bixin is 5 ppm, the resulting colored water has a color value a* in the range of from 20 to 25, and preferably the color value b* is preferably in the range of from 25 to 50.

When the average particle size of the inner phase of the bixin form measured by Photon Correlation Spectroscopy (Beckman Coulter N4 Plus Submicron Particle Sizer) is in the range of from 200 to 400 nm, the color is red-orange. When the bixin form is dissolved in water, so that the amount of bixin is 5 ppm, the resulting colored water has preferably a color value a* in the range of from 15 to 25. The color value b* of such bixin form is preferably in the range of from 10 to 20.

In a preferred embodiment of the present invention the bixin is preferably encapsulated, especially microencapsulated, i.e. embedded, in a matrix of at least one modified food starch. The modified food starch (esp. OSA starch) and mixtures thereof are described in more detail below.

The amount of the modified food starch in the form is usually in the range of from 35 to 55 weight-%, preferably in the range of from 40 to 50 weight-%, more preferably of around 45 weight-%, based on the total weight of the form.

Additionally one or more water- and/or fat-soluble antioxidants may be present, preferably in an amount of from 0.5 to 5 weight-% in total, based on the total amount of the bixin form.

A preferred example of such water-soluble antioxidants is sodium ascorbate. When sodium ascorbate is used, its amount is preferably chosen in such a way so that its final amount in the bixin form is in the range of from 0 to 2 weight-%, based on the total weight of the bixin form.

A preferred example of such fat-soluble antioxidants is dl-alpha-tocopherol. When dl-alpha-tocopherol is used, its amount is preferably chosen in such a way so that its final amount in the bixin form is in the range of from 0 to 3 weight-% (preferably 0 to 2 weight-%), based on the total weight of the bixin form. Alternatively natural (R,R,R)-alpha-tocopherol may also be used.

Especially preferred is a bixin form, wherein the matrix further comprises at least one saccharide. The saccharides are disclosed in more detail below.

When a saccharide is present, the amount of the saccharide is preferably in the range of from 0.1 to 10 weight-%, more preferably in the range of from 2 to 8 weight-%, even more preferably in the range of from 3 to 7 weight-%, most preferably of around 5 weight-%, based on the total weight of the bixin form.

An additional ingredient that may also be present in the bixin form are middle-chain triglycerides as e.g. commercially available as "Bergabest 60/40" (a mixture of 60% octanoic acid and 40% decanoic acid) (commercially available from Berg + Schmidt, Hamburg, Germany). The term "middle-chain triglycerides" encompasses saturated $C_{6-12}$ fatty acids and their mixtures such as fractionated coconut oil.

When middle-chain triglycerides are present, their amount is preferably in the range of from 0.1 to 10 weight-%, more preferably in the range of from 2 to 8 weight-%, even more preferably in the range of from 3 to 7 weight-%, most preferably of around 5 weight-%, based on the total weight of the bixin form.

The amounts of all ingredients of the bixin form sum up to 100 weight-%.

Preferably no other compounds are present in the bixin form. Such not-being-present compounds are preferably the following ones:

- Gum Acacia; Gum Arabic; also modified as disclosed in WO 2008/110225;
- Plant proteins;
- Milk proteins;
- Ligninsulfonate;
- Conjugates of plant gums and modified food starch, especially those as disclosed in WO 2011/039336;
- Sodium lauryl sulfate and other sodium alkyl sulfates.

This preference applies for all bixin forms of the present invention.

"Saccharide"

The term "a saccharide" encompasses one saccharide or more.

The term "saccharide" in the context of the present invention encompasses mono-, di-, oligo- and polysaccharides, as well as any mixtures thereof.

Examples of monosaccharides are fructose, glucose (= dextrose), mannose, galactose, sorbose, as well as any mixtures thereof.

Preferred monosaccharides are glucose and fructose, as well as any mixture thereof.

The term "glucose" in the context of the present invention does not only mean the pure substance, but also a glucose syrup with a DE ≥ 90. This also applies for the other monosaccharides.

The term "dextrose equivalent" (DE) denotes the degree of hydrolysis and is a measure of the amount of reducing sugar calculated as D-glucose based on dry weight; the scale is based on native starch having a DE close to 0 and glucose having a DE of 100.

Examples of disaccharides are saccharose (= sucrose), isomaltose, lactose, maltose and nigerose, as well as any mixture thereof.

An example of an oligosaccharide is maltodextrin.

An example of a polysaccharide is dextrin.

An example of a mixture of mono- and disaccharides is invert sugar (glucose + fructose + saccharose).

Mixtures of mono- and polysaccharides are e.g. commercially available under the tradenames Glucidex IT 47 (from Roquette Frères), Dextrose Monohydrate ST (from Roquette Frères), Sirodex 331 (from Tate & Lyle), Glucamyl F 452 (from Tate & Lyle) and Raftisweet I 50/75/35 (from Lebbe Sugar Specialties).

The most preferred saccharides are glucose (e.g. "dextrose monohydrate 0.5%"), maltodextrin (e.g. "maltodextrin DE 2023 2%") and sucrose.

When glucose such as "dextrose monohydrate 0.5%" is present in the matrix, its amount is preferably chosen in such a way so that its final amount in the bixin form is in the range of from 0 to 1 weight-%, based on the total weight of the bixin form.

When maltodextrin such as "maltodextrin DE 2023 2%" is present in the matrix, its amount is preferably chosen in such a way so that its final amount in the bixin form is in the range of from 0 to 3 weight-%, based on the total weight of the bixin form.

When sucrose is present in the matrix, its amount is preferably chosen in such a way so that its final amount in the bixin form is in the range of from 0 to 4 weight-%, based on the total weight of the bixin form.

"Modified food starch"

A modified food starch is a food starch that has been chemically modified by known methods to have a chemical structure which provides it with a hydrophilic and a lipophilic portion. Preferably the modified food starch has a long hydrocarbon chain as part of its structure (preferably C5-C18).

At least one modified food starch is preferably used to make a liquid formulation of this invention, but it is possible to use a mixture of two or more different modified food starches in one liquid formulation.

Starches are hydrophilic and therefore do not have emulsifying capacities. However, modified food starches are made from starches substituted by known chemical methods with hydrophobic moieties. For example starch may be treated with cyclic dicarboxylic acid anhydrides such as succinic anhydrides, substituted with a hydrocarbon chain (see O. B. Wurzburg (editor), "Modified Starches: Properties and Uses, CRC Press, Inc. Boca Raton, Florida, 1986, and subsequent editions). A particularly preferred modified food starch of this invention has the following formula (I)

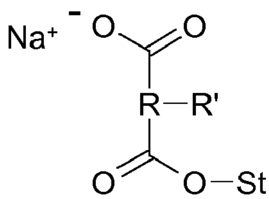

(I)

wherein St is a starch, R is an alkylene radical and R' is a hydrophobic group. Preferably R is a lower alkylene radical such as dimethylene or trimethylene. R' may be an alkyl or alkenyl group, preferably having 5 to 18 carbon atoms. A preferred compound of formula (I) is an "OSA-starch" (starch sodium octenyl succinate). The degree of substitution, i.e. the number of esterified hydroxyl groups to the number of free non-esterified hydroxyl groups usually varies in a range of from 0.1% to 10%, preferably in a range of from 0.5% to 4%, more preferably in a range of from 3% to 4%.

The term "OSA-starch" denotes any starch (from any natural source such as corn, waxy maize, waxy corn, wheat, tapioca and potato or synthesized) that was treated with octenyl succinic anhydride (OSA). The degree of substitution, i.e. the number of hydroxyl groups esterified with OSA to the number of free non-esterified hydroxyl groups usually varies in a range of from 0.1% to 10%, preferably in a range of from 0.5% to 4%, more preferably in a range of from 3% to 4%. OSA-starches are also known under the expression "modified food starch".

The term "OSA-starches" encompasses also such starches that are commercially available e.g. from National Starch under the tradenames HiCap 100, Capsul (octenylbutanedioate amylodextrin), Capsul HS, Purity Gum 2000, Clear Gum Co03, UNI-PURE, HYLON VII; from National Starch and Roquette Frères, respectively; from CereStar under

the tradename C*EmCap or from Tate & Lyle.

In an embodiment of the present invention a commercially available modified food starch such as e.g. HiCap 100 (from National Starch) and ClearGum Co03 (from Roquette Frères) is used.

## Processes of the present invention

The present invention is also directed to a process for the manufacture of a bixin form as described above comprising the following steps:

a) forming a solution of the bixin in an organic solvent, optionally adding a fat-soluble antioxidant and/or optionally adding an oil and/or middle-chain triglycerides ("MCT");
b) providing a matrix of modified food starch and optionally a saccharide and/or a water-soluble antioxidant in water;
c) emulsifying the solution obtained in step a) into the matrix obtained in step b) to obtain an emulsion;
d) removing the organic solvent from the emulsion obtained in step c) to obtain a bixin emulsion;
e) optionally drying the bixin emulsion to obtain a bixin powder.

When steps a), b), c) and d) are performed, the bixin form obtained is a bixin emulsion. When steps a), b), c), d) and e) are performed, the bixin form obtained is a bixin powder.

The steps are now described in detail below.

Step a)

The amounts of the bixin, the fat-soluble antioxidant and the oil and/or MCT are chosen so that the final amounts of these compounds in the resulting form after having performed all steps is as described above.

The term "oil" in the context of the present invention encompasses glycerol and any triglyceride such as vegetable oils or fats like corn oil, sunflower oil, soybean oil, safflower oil, rapeseed oil, peanut oil, palm oil, palm kernel oil, cotton seed oil, olive oil or coconut oil.

The oils can be from any origin. They can be natural, modified or synthetic. If the oils are natural they can be plant or animal oils. The term "oil" in the context of the present invention thus also encompasses canola oil, sesame oil, hazelnut oil, almond oil, cashew oil, macadamia oil, mongongo nut oil, pracaxi oil, pecan oil, pine nut oil, pistachio oil, sacha Inchi (Plukenetia volubilis) oil, walnut oil or polyunsaturated fatty acids (= "PUFAs") (for example arachidonic acid, eicosapentaenoic acid, docosahexaenoic acid and $\gamma$-linolenic acid) as well as the triglycerides of PUFAs and the esters of PUFAs, e.g. the ethyl esters of PUFAs.

The amount of the solvent and the dissolution temperature are chosen so as to dissolve the bixin, the fat-soluble antioxidant, if present, and the MCT, if present, completely. Usually it is necessary to heat up the suspension obtained when mixing all compounds present in this step to get a solution. Preferably the temperature to which the suspension is heated up is in the range of from 100 to 120°C. After having obtained the solution it is usually kept at the temperature it was before heated up to or at a slightly higher temperature (+ 5 Kelvin).

Step b)

Preferably this step is performed at a temperature in the range of from 50 to 70°C, more preferably at a temperature in the range of from 64°C to 67°C. Preferably the temperature is lower if a saccharide is present compared to the temperature that is used when no saccharide is present.

Step c)

Preferably this step is performed at a mixing temperature in the range of from 60 to 90°C, more preferably at a mixing temperature in the range of from 65 to 80°C, to obtain an emulsion.

The emulsification can be achieved by using a rotor-stator device or a high pressure homogenizer or both. Other devices known to the person skilled in the art may also be used.

If rotor-stator device and/or a high pressure homogenizer is used, a pressure drop in the range of 100 to 1000 bar, more preferably in the range of 150 to 300 bar, is preferably applied.

Step d)

The organic solvent may e.g. be removed by using a thin film evaporator cascade (preferred). Other methods known to the person skilled in the art are also applicable.

Step e)

The resulting emulsions after having performed steps a) to d) can be used as such. They can, however, also be dried by any method known to the person skilled in the art, e.g. by spray-drying, spray-drying in combination with fluidised bed granulation or by a powder-catch technique, whereby the sprayed emulsion droplets are caught in a bed of an absorbent, such as starch (e.g corn starch), and subsequently dried.

Beverages according to the present invention

In a preferred embodiment of the present invention the bixin form according to the present invention is used in beverages, especially in soft drinks, which generally have a pH in the range of from 2 to 5, preferably a pH in the range of from 2.5 to 4, more preferably a pH in the range of from 2.8 to 3.6. Surprisingly it was found that the bixin form is acid stable in such beverages. Therefore, the beverages themselves are acid stable and preferably also color stable.

"Color-stable" in the context of the present invention means that the color difference DE* between the initial color and the color after a storage time of 3 months should be lower than 10 (DE* < 10). DE* is the distance in a metric color scale (CIE) of two measuring points (colors) where delta is a Greek letter often used to denote difference, and "E" stands for "Empfindung" (German for "sensation"). A DE* < 10 means that the color difference is acceptable and at DE*< 3 cannot be seen by naked eyes, i.e. without the use of an apparatus such as a colorimeter.

Beverages wherein the liquid formulations of the present invention can be used as a colorant or a functional ingredient can be carbonated beverages e.g., flavoured seltzer waters, soft drinks or mineral drinks, as well as non-carbonated beverages e.g. flavoured waters, fruit juices, fruit punches and concentrated forms of these beverages. They may be based on natural fruit or vegetable juices or on artificial flavours. Also included are alcoholic beverages. Besides, sugar containing beverages diet beverages with non-caloric and artificial sweeteners are also included. Especially preferred are soft drinks, preferably with a pH in the range of from 2 to 5, preferably with a pH in the range of from 2.5 to 4, more preferably with a pH in the range of 2.8 to 3.6.

The final concentration of the bixin, which is added via the bixin form of the present invention to beverages may be from 1 to 50 ppm, particularly from 2 to 30 ppm, more preferably from 5 to 25 ppm, based on the total weight of the beverage and depending on the particular beverage to be colored or fortified and the intended grade of coloration or fortification.

For coloration or fortification of a beverage a bixin form of this invention can be used according to methods per se known for the application of emulsions, dispersions, suspensions or powders.

Further embodiments of the present invention

The present invention is also directed to the use of a bixin form, wherein the bixin is microencapsulated, and whereby preferably the average particle size of the inner phase of the bixin form measured by Photon Correlation Spectroscopy (Beckman Coulter N4 Plus Submicron Particle Sizer) is in the range of from 100 to 400 nm, for coloring beverages. As disclosed above, the bixin in the bixin form is preferably microencapsulated in a matrix of modified food starch, wherein the matrix optionally further comprises a saccharide.

A further embodiment of the present invention is a method for coloring a beverage, wherein a bixin form, wherein the bixin is microencapsulated, and whereby preferably the average particle size of the inner phase of the bixin form measured by Photon Correlation Spectroscopy (Beckman Coulter N4 Plus Submicron Particle Sizer) is in the range of from 100 to 400 nm, is added to the beverage to provide a yellow-orange to red-orange color to the beverage.

The following non limiting examples illustrate the invention further.

## Examples

Examples 1-7: Manufacture of powders according to the present invention

The examples were carried out according to the following general procedure with the amounts of compounds (bixin, middle-chain triglycerides, modified food starch, saccharide, antioxidants, water) and the process parameters as given in detail in Table 1. As solvent an organic solvent selected from the group consisting of dimethyl carbonate, ethyl formate, ethyl acetate, isopropyl acetate, methyl tert-butyl ether and methylene chloride was used. The amount of the solvent and the dissolution temperature were chosen so as to dissolve the bixin and the fat-soluble antioxidant and the MCT, if present, completely.

The bixin used was the commercially available AlcabixP (from AICA-Color, Peru).

General procedure

Bixin, the fat-soluble antioxidant and the middle-chain triglycerides (MCTs) (amounts as given in Table 1) are dispersed in an organic solvent as mentioned above. The resulting suspension is then heated up to a temperature as given in Table 1 to dissolve the whole amount of bixin. The resulting solution is then held at the temperature as given in Table 1 in a holding vessel.

The matrix phase consisting of the modified food starch (= OSA starch), the saccharide and the water-soluble antioxidant as given in Table 1 is dissolved in the amount of water as given in Table 1 at the temperature as given in Table 1.

The emulsification process consists of two steps and is carried out under pressure.
Both phases are continuously fed to a rotor stator device where the solution is emulsified into the matrix phase. The rotation speed is 5000 rpm (revolutions per minute) and the mixing temperature is as given in Table 1. The next step entails a second micronisation step and consists of a sapphire orifice. The orifice diameter is as given in Table 1 and the applied pressure drop over the orifice is as given in Table 1 at the temperature as given in Table 1.

Then the organic solvent is removed from the emulsion by using a thin film evaporator cascade. After that the solvent-free emulsion is sprayed into a fluidized corn starch bed where the particles are dried.

The results of the examples are summarized below. The average particle size of the inner phase was measured by Photon Correlation Spectroscopy (Beckman Coulter N4 Plus Submicron Particle Sizer).

The color intensity E1 /1 is the absorbance of a 1% solution and a thickness of 1 cm and is calculated as follows: E1/1 = (Amax-A650)*dilution factor / (weight of sample * content of product form in %).

"(Amax-A650)" means the value you get when you substract the Adsorption value measured at 650 nm ("A650") wavelength from the value ("Amax") that was measured at the maximum Adsorption in the UV-Spectrophotometer.
"*" means "multiplied with".
"dilution factor" = the factor by which the solution has been diluted.
"weight of sample" = the amount/weight of the formulation that was used in [g]
"content of product form in %" = "the amount of bixin in the powder in %"
(detected via UV spectrophotometer) which is in the range of from 4.5 to 9.7% in the following examples.

Example 1

The final product has a bixin content of 4.5%, E1/1 = 1355 and a particle size of the inner phase of 226 nm.

Example 2

The final product has a bixin content of 9.0%, E1/1 = 710 and a particle size of the inner phase of 306 nm.

Example 3

The final product has a bixin content of 7.1%, E1/1 = 992 and a particle size of the inner phase of 282 nm.

Example 4

The final product has a bixin content of 9.7%, E1/1 = 621, a particle size of the inner phase of 352 nm and a turbidity of 196 NTU (measured in a pasteurized soft drink (6 ppm) as prepared according to the instruction below). Such turbidity adds to the "juicy" appearance of a fruit juice when added to it and is in this application advantageous.

Example 5

The final product has a bixin content of 5.1%, E1/1 = 1057, a particle size of the inner phase of 307 nm and a turbidity of 160 NTU (measured in a pasteurized soft drink (6 ppm) as prepared according to the instruction below).

Example 6

The final product has a bixin content of 4.8%, E1/1 = 1035, a particle size of the inner phase of 378 nm and a turbidity of 157 NTU (measured in a pasteurized soft drink (6 ppm) as prepared according to the instruction below).

Example 7

The final product has a bixin content of 5.6%, E1/1 = 834, a particle size of the inner phase of 331 nm and a

turbidity of 209 NTU (measured in a pasteurized soft drink (6 ppm) as prepared according to the instruction below).

Application trials with the powders according to examples 1-7

The powders according to examples 1-7 have been applied in soft drinks with a concentration of the bixin of 6 ppm. The objective of these trials was to evaluate the performance of these samples for their application in beverages. The powders have to provide a good color stability, good chemical stability and a good performance of appearance (no or less ringing, absence of or only few particles on the surface and (almost) no sedimentation).

Preparation of the soft drinks

The soft drinks had the following composition:

| | **Ingredient** | **Amount of ingredient** |
|---|---|---|
| 1 | Potassium sorbate | 0.2 g |
| 2 | Sugar syrup (64° Brix) | 156.2 g |
| | Ascorbic acid | 0.2 g |
| | Aqueous 50-weight-% citric acid | 5.0 g |
| | Apricot flavor (water-soluble, Givaudan 78848-56) | 0.2 g |
| | Pectin solution 2-weight-% | 10 g |
| | Stock solution * | 6 g (i.e. 6 ppm) |
| 3 | Water | Filled up so that a total amount of the soft drink of 1000 ml results |
| | Total amount | 1000 ml |
| * From each powder according to examples 1 to 7 a stock solution was prepared, whereby the powder was diluted with water so that the stock solution had a concentration of the bixin of 0.1 weight-% (= 1000 ppm). | | |

The soft drinks were prepared as follows:

Potassium sorbate 1) was dissolved in water, the other ingredients 2) were added one after the other while the mixture was gently stirred. Then the resulting soft drink syrup was diluted with drink water in such an amount to result in 1000 ml of the soft drink. The pH of the soft drinks was in the range of from 2.8 to 3.6.

The soft drinks were then filled in glass bottles and the bottles sealed with a metallic cap. Some of these bottles were pasteurized and some not. A tunnel pasteurizer from Miele was used for pasteurization with a holding temperature of 80°C for 1 minute at a core of the bottle.

The bottles were stored at room temperature (temperature in the range of 18 to 27°C) and under light exposure 12 hours per day with 800 Lux. Color measurements were performed directly after beverage preparation (time = 0), as well as after a storage time of 2 weeks, 30 days, 60 days and 90 days.

Color measurements

Color measurements for the application in food are performed with a colorimeter (Hunter Lab Ultra Scan Pro) which can other than a spectrophotometer express color values according to the psychophysical perception of color by human eye.

Color measurements are carried out after CIE guidelines (Commission International d'Eclairage). Values can be expressed either as planar coordinates L*a*b* with L* being the measuring value for lightness, with a*being the value on the red-green-axis and with b* being the value on the yellow-blue-axis.

Instrument settings:

- Color scale : CIE L*a*b* / L*C*h*
- Light source definition: D65 daylight equivalent
- Geometry : Diffuse / 8°
- Wavelengths: scan 350 to 1050 nm in 5 nm optical resolution
- Sample measurement area diameter: 19 mm (large)
- Calibration mode: Transmission/ white tile

The Chroma (C*) sometimes called saturation describes the vividness or dullness of a color which can be calculated as followed:

$$C^* = \sqrt{(a^{*2} + b^{*2})}$$

The angle called hue (h) describes how we perceive an object's color and can be calculated as followed:

$$h = \tan(b/a)^{(-1)}$$

The color difference DE* is calculated using the following equation:

$$DE^* = \sqrt{(\Delta L^*)^2 + (\Delta a^*)^2 + (\Delta b^*)^2}$$

whereby L = lightness, a = red value, and b = yellow value
$\Delta L^* = L_x^* - L_0^*$; 0 = initial value; x = time of measuring
$\Delta a^* = a_x^* - a_0^*$; 0 = initial value; x = time of measuring
$\Delta b^* = b_x^* - b_0^*$; 0 = initial value; x = time of measuring

For a good color stability, DE* should be lower than 10 (DE* < 10); this means that the color difference is acceptable and at DE*< 3 cannot be seen by naked eyes, i.e. without the use of an apparatus such as a colorimeter.

Physical stability is measured by human eye according to an evaluation matrix. Parameter recorded for soft drink beverages are:

- Ring formation / Neck ring in bottles in score 6 to 1 with "6" representing "no ring", and "1" representing "very strong ring".
- Surface particles in score 6 to 1 with "6" representing "no particles / no covering" and "1" representing "more than half of surface covered with particles / more than two third of surface covered with film other than particles".
- Sediment on the bottom of packaging as fine film, individual particles or ring-formation in score 6 to 1 with "6" representing "either no particles, no film or no ring" and "1" representing "either more than half of bottom covered with particles, bottom covered with strong film or very strong ring visible".

<u>**Turbidity measurements**</u>

Suspended solids (or particles) are responsible for the turbid appearance of beverages containing juice. This turbid appearance can be evaluated by turbidity measurements. Turbidity depends on the light-scattering properties of such particles: their size, their shape and their refractive index.

In this work turbidity measurements were conducted using a Turbidimeter (Hach 2100N IS®, USA) and turbidity values were given in NTU (nephelometric turbidity units). Neophelometer measures the light scattered by a sample in 90° from the incident light path (s. Fig. 1).

Fig. 1 illustrates the principle of the nephelometric turbidity measurement Instrument settings: Light source: 860 ± 10 nm LED

Results concerning the soft drinks containing bixin (powders according to examples 1-7)

a) Color difference

The results concerning the measurement of the color difference during storage are shown in Fig. 2 and 3.

Fig. 2 shows the color difference (DE*) in non-pasteurized soft drinks during a storage time of up to 3 months.
x-axis: Storage time in days; y-axis: Color difference (DE*) (dimensionless);
☐ = soft drink containing a powder according to example 4;
x = soft drink containing a powder according to example 6;
• = soft drink containing a powder according to example 7.

All samples showed acceptable (DE* ~ 10) and similar color stability.

Fig. 3 shows the color difference (DE*) in pasteurized soft drinks during a storage time of up to 3 months.
x-axis: Storage time in days; y-axis: Color difference (DE*) (dimensionless);
☐ = soft drink containing a powder according to example 4;
x = soft drink containing a powder according to example 6;
• = soft drink containing a powder according to example 7.

All samples showed very good (DE* < 10) and similar color stability.

Fig. 4 shows the chemical stability (% recovery) in pasteurized soft drinks during a storage time of up to 3 months.
x-axis: Storage time in days; y-axis: Chemical stability (% recovery) "CS"(dimensionless);
☐ = soft drink containing a powder according to example 4;
x = soft drink containing a powder according to example 6;
• = soft drink containing a powder according to example 7.

All samples showed good chemical stability (% recovery <15).

c) Physical appearance

After 3 months of storage the non-pasteurized and pasteurized soft drinks were evaluated visually concerning their physical appearance. Hereby the samples were examined visually whether they show a ring in the bottle neck, whether they show particles on the surface and whether they show white sediments. The following schedule of notes was applied:

Ring in bottle neck:

6 = no ring
5 = hardly noticeable ring
4 = recognizable ring
3 = clear fine ring recognizable
2 = strong ring recognizable
1 = broad ring recognizable

Particles on surface:

6 = no particles
5 = 1 to 10 particles
4 = more than 10 particles
3 = not countable anymore
2 = half of the surface covered
1 = more than half of the surface covered

Sediment:

6 = no sediment

5 = slight matt glimmer
4 = fine matt sediment
3 = matt sediment
2 = strong matt sediment
1 = very strong matt sediment

For a good performance, scores should be ≥ 3.

Tab. 2 shows the results obtained for the appearance evaluation of a non-pasteurized soft drink.

| Soft drink containing a powder according to example | Ring in bottle neck | Particles on the surface | White sediment |
|---|---|---|---|
| 4 | 4 | 6 | 4 |

The sample showed a very good performance with respect to its appearance attributes.

Tab. 3 shows the results obtained for the appearance evaluation of a pasteurized soft drink.

| Soft drink containing a powder according to example | Ring in bottle neck | Particles on the surface | White sediment |
|---|---|---|---|
| 4 | 4 | 6 | 5 |

Also in pasteurized drinks, the sample showed a very good performance with respect to its appearance attributes.

Comparison example

The commercial available product CapColor A-8-WSS-145 from Christian Hansen, Denmark, was further analyzed. It is a dark reddish brown liquid or gel, produced by extraction of annatto pigments from the seeds of the annatto tree (*Bixa Orellana* L.). The pigments are dispersed in an aqueous solution of vegetable hydrocolloid (Gum Arabic). CapColor A-8-WSS-145 comprises 7.5 to 8.5% of bixin as major coloring principle.
The E1/1 corrected in water is only 226 (430 nm) and therefore, much lower than the E1/1 of the bixin forms according to the present invention.

Table 1: In this table D = dl-α-tocopherol; H = HiCap 100; Q = Q-Naturale 200 (Quillaja - a mixture of triterpenic saponins, commercially e.g. provided by Desert King International, San Diego, US); C = ClearGum Co03 (an OSA starch); P = Purity Gum Ultra (an OSA starch); MCT = middle chain triglycerides (commercially available as Bergabest 60/40); S = Sodium ascorbate.

| **Example** | 1 | 2 | 3 | 4 | 5 | 6 | 7 |
|---|---|---|---|---|---|---|---|
| **Amount of bixin [g]** | 62 | 60 | 60 | 62 | 48 | 56 | 54 |
| **Fat-soluble Antioxidant** | D | D | D | D | D | D | D |
| **Amount of fat-soluble antioxidant [g]** | 9 | 8 | 9 | 9 | 2.6 | 3 | 4.3 |
| **Amount of MCT [g]** | 28 | - | 27 | 4.5 | 12.8 | 15 | 21.4 |
| **Modified food starch** | H | H | H | H | H/Q | C/P | C/P |
| **Amount of modified food starch [g]** | 218 | 231 | 211 | 218 | 189/11.3 | 113/110 | 127/56.3 |
| **Saccharide and amount** | 21 g of maltodextrin (DE2023) | - | 21 g of maltodextrin (DE2023) | - | 5.3 g of dextrose monohydrate + 24.7 g of maltodextrin (DE2023) | 4 g of dextrose monohydrate + 8 g of maltodextrin (DE2023) | 32.8 g of sucrose + 23.4 g of maltodextrin (DE2023) |
| **Water-soluble antioxidant** | none | none | none | none | S | S | none |
| **Amount of water-soluble antioxidant [g]** | - | - | - | - | 5.3 | 3 | - |
| **Amount of water [g]** | 720 | 693 | 696 | 720 | 946 | 913 | 718 |
| **Temperature at which the hydrocolloid matrix is prepared** | 65°C | 65°C | 67°C | 64°C | 50°C | 50°C | 50°C |
| **Temperature to which the suspension is heated up** | 105°C | 112°C | 116°C | 113°C | 106°C | 104°C | 106°C |
| **Temperature at which the solution is held** | 120°C | 117°C | 116°C | 120°C | 110°C | 108°C | 114°C |
| **Mixing temperature** | 68°C | 66°C | 77°C | 66°C | 71°C | 71°C | 90°C |
| **Orifice diameter [□m]** | 170 | 230 | 230 | 230 | 170 | 170 | 200 |

(continued)

| **Example** | 1 | 2 | 3 | 4 | 5 | 6 | 7 |
|---|---|---|---|---|---|---|---|
| **Applied pressure drop at temperature given** | 215 bar at 68°C | 56 bar at 66°C | 64 bar at 69°C | 48 bar at 66°C | 188 bar at 66°C | 180 bar at 70°C | 175 bar at 75°C |

## Claims

1. A beverage comprising a bixin form wherein the beverage is physically stable at a pH in the range of from 2 to 5, preferably a pH in the range of from 2.5 to 4, more preferably a pH in the range of from 2.8 to 3.6.

2. The beverage according to claim 1, wherein the beverage is color stable.

3. The beverage according to claim 1 and/or 2, wherein the bixin in the bixin form is microencapsulated in a matrix of a hydrocolloid, preferably in a matrix of at least one modified food starch.

4. The beverage according to claim 3, wherein the matrix further comprises a saccharide.

5. The beverage according to any one or more of claims 1 to 4, wherein the bixin form upon re-dispersion in water provides a yellow-orange to red-orange color hue at high color strength **characterized by** an E1/1 value of at least 400, preferably an E1/1 value in the range of from 500 to 1800.

6. The beverage according to any one or more of the preceding claims, wherein the amount of bixin in the beverage is in the range of from 1 ppm to 50 ppm, preferably in the range of from 2 to 30 ppm, more preferably in the range of from 3 to 25 ppm, based on the total weight of the beverage.

7. The beverage according to any one or more of the preceding claims, wherein the beverage is selected from the group consisting of soft drinks, flavored waters, fortified waters, sports drinks, mineral drinks, carbonated beverages, fruit juices, fruit-juice containing soft drinks, fruit punches, alcoholic beverages, sugar-containing beverages and diet beverages.

8. A bixin form, wherein the bixin is microencapsulated in a matrix of a hydrocolloid.

9. The bixin form according to claim 8, wherein the bixin form upon re-dispersion in water provides a yellow-orange to red-orange color hue at high color strength **characterized by** an E1/1 value of at least 400, preferably an E1/1 value in the range of from 500 to 1800.

10. The form according to claim 8 and/or 9 being a powder or an emulsion.

11. The form according to any one or more of claims 8 to 10, wherein the bixin is microencapsulated in a matrix of at least one modified food starch.

12. The form according to claim 11, wherein the matrix further comprises a saccharide.

13. A process for the manufacture of a bixin emulsion or a bixin powder according to any one or more of claims 10 to 12 comprising the following steps:

    a) forming a solution of the bixin in an organic solvent, optionally adding a fat-soluble antioxidant and/or optionally adding an oil and/or middle-chain triglycerides;
    b) providing a matrix of modified food starch and optionally a saccharide and/or a water-soluble antioxidant in water;
    c) emulsifying the solution obtained in step a) into the matrix obtained in step b) to obtain an emulsion;
    d) removing the organic solvent from the emulsion obtained in step c) to obtain a bixin emulsion;
    e) optionally drying the bixin emulsion to obtain a bixin powder.

14. Use of a bixin form, wherein the bixin is microencapsulated, and whereby preferably the average particle size of the inner phase of the bixin form measured by Photon Correlation Spectroscopy (Beckman Coulter N4 Plus Submicron Particle Sizer) is in the range of from 100 to 400 nm, for coloring beverages.

15. The use according to claim 14, wherein the bixin in the bixin form is microencapsulated in a matrix of modified food starch, and wherein the matrix optionally further comprises a saccharide.

Fig. 1

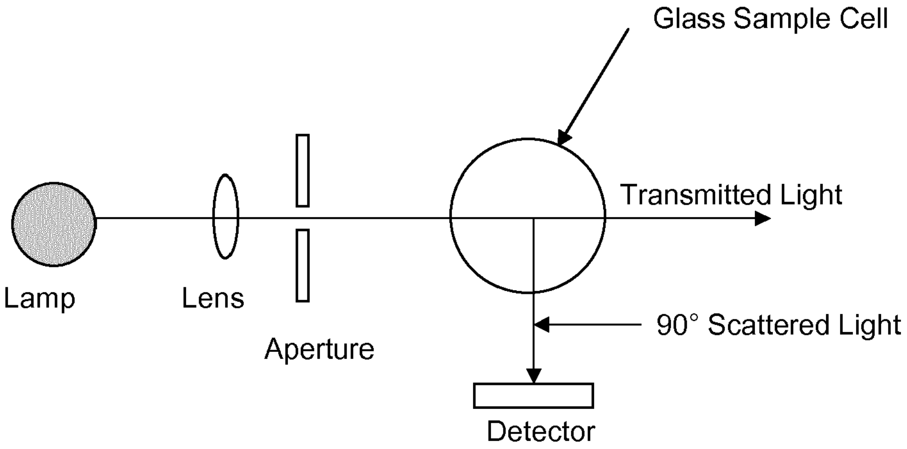
Glass Sample Cell
Transmitted Light
Lamp
Lens
Aperture
90° Scattered Light
Detector

Fig. 2

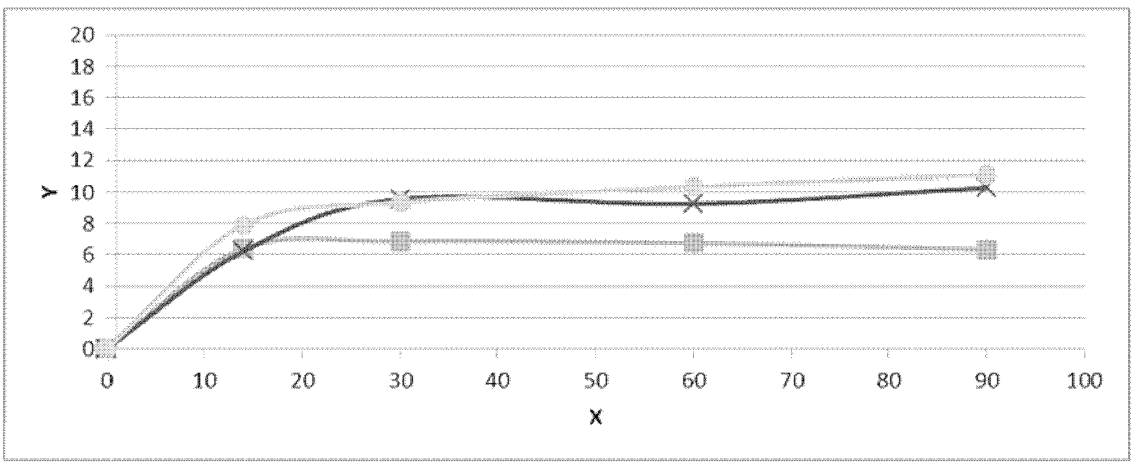
y
x
0
2
4
6
8
10
12
14
16
18
20
0
10
20
30
40
50
60
70
80
90
100

Fig. 3

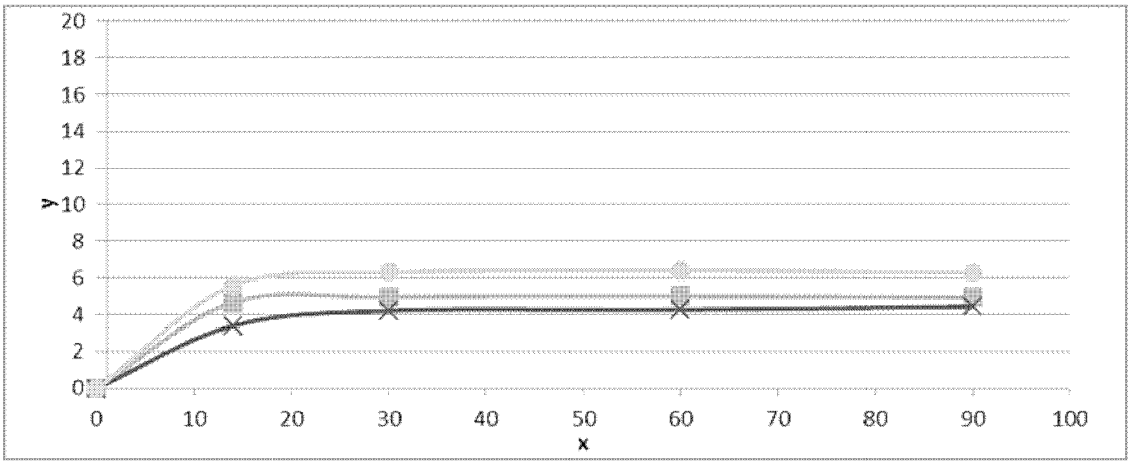


Fig. 4

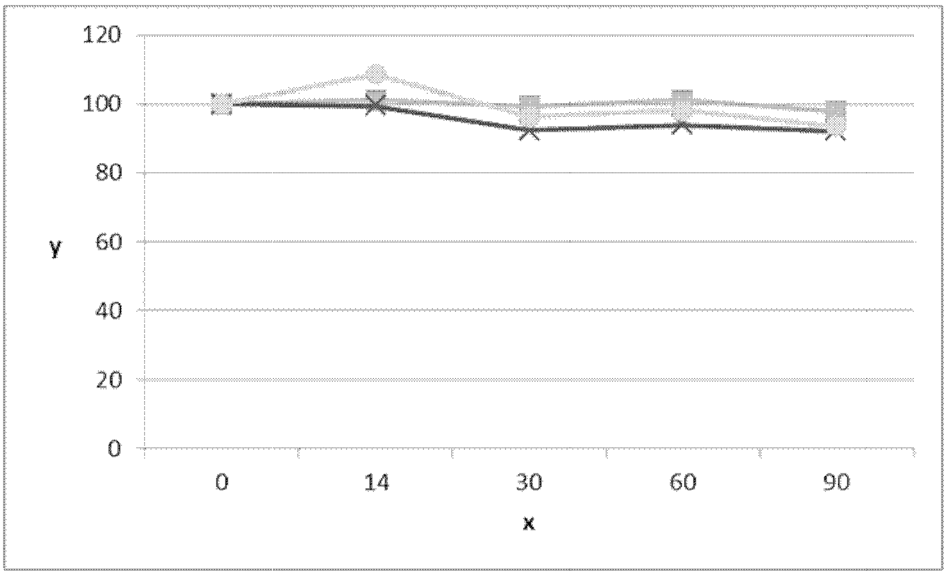


Fig. 5

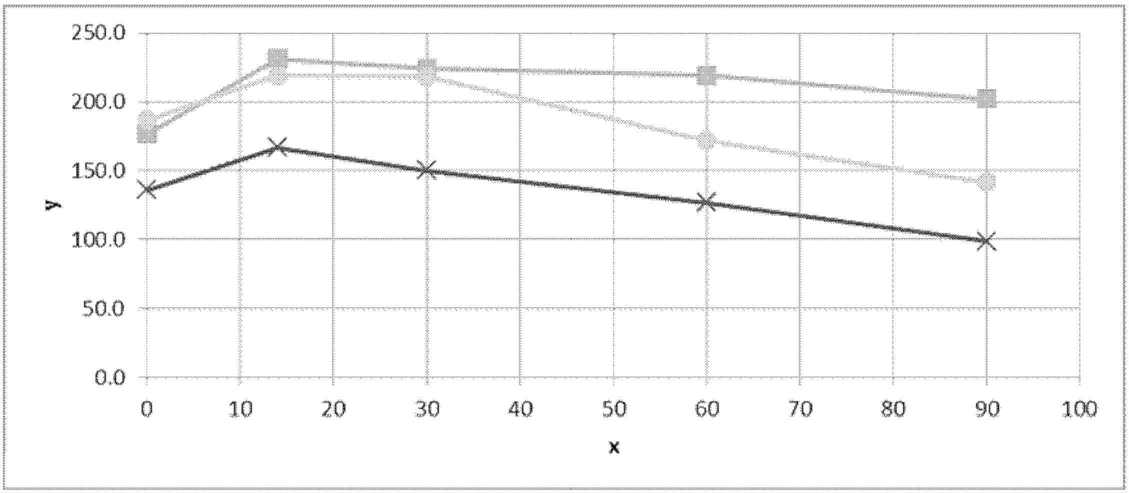
250.0
200.0
150.0
100.0
50.0
0.0
y
0
10
20
30
40
50
60
70
80
90
100
x

Fig. 6

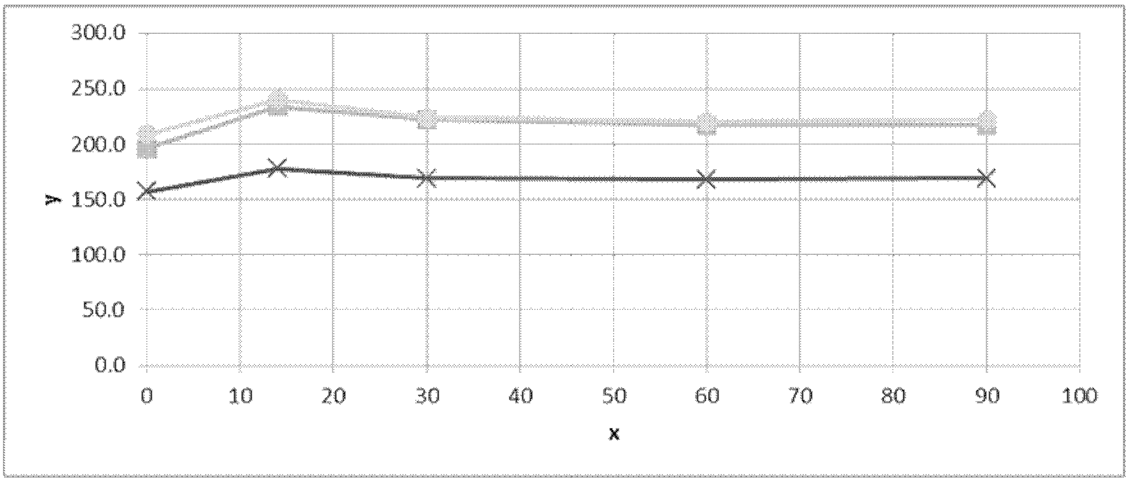
300.0
250.0
200.0
150.0
100.0
50.0
0.0
y
0
10
20
30
40
50
60
70
80
90
100
x

Europäisches Patentamt
European Patent Office
Office européen des brevets

# EUROPEAN SEARCH REPORT

Application Number
EP 15 17 1900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/191556 A1 (CHR HANSEN AS [DK]) 4 December 2014 (2014-12-04)<br>* claims 1, 4, 8, 9, 10, 12 *<br>----- | 1-3, 5-11,14, 15 | INV. A23L2/52 A23L1/00 A23L1/0522 A23L1/275 |
| X | EP 2 687 103 A1 (BASF SE [DE]) 22 January 2014 (2014-01-22)<br>* paragraphs [0056], [0062]; claim 17 *<br>----- | 1-4,7,8, 10-15 | |
| X | US 2003/148099 A1 (DEFREITAS ZORAIDA [US] ET AL) 7 August 2003 (2003-08-07)<br>* claims 1, 3, 5 *<br>----- | 8 | |
| X,D | WO 2011/039336 A1 (DSM IP ASSETS BV [NL]; VIDONI OLIVIA [FR]; HITZFELD ANDREA [DE]; LEUEN) 7 April 2011 (2011-04-07)<br>* page 6, line 9 - page 12, line 4; claims 6, 9, 11, 12, 13; example 6 *<br>----- | 1-4,6-8, 10-15 | |
| X | WO 2012/059286 A1 (DSM IP ASSETS BV [NL]; HITZFELD ANDREA [CH]; LEUENBERGER BRUNO H [CH];) 10 May 2012 (2012-05-10)<br>* page 3, line 26 - page 8, line 37; claims 6, 7, 10, 12; examples 1-5; table 1 *<br>----- | 1-5, 7-10,14 | TECHNICAL FIELDS SEARCHED (IPC)<br>A23L |
| X | US 6 500 473 B1 (KOEHLER KLAUS [DK] ET AL) 31 December 2002 (2002-12-31)<br>* column 9, line 24 - column 11, line 16; claims 1, 11, 17, 35; example 1 *<br>----- | 1-4,6-8, 10-15 | |

The present search report has been drawn up for all claims

1

| Place of search | Date of completion of the search | Examiner |
|---|---|---|
| The Hague | 24 November 2015 | Merel-Rausch, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 17 1900

This annex lists the patent family members relating to the patent documents cited in the above-mentioned European search report. The members are as contained in the European Patent Office EDP file on
The European Patent Office is in no way liable for these particulars which are merely given for the purpose of information.

24-11-2015

| Patent document cited in search report | Publication date | Patent family member(s) | Publication date |
|---|---|---|---|
| WO 2014191556 A1 | 04-12-2014 | NONE | |
| EP 2687103 A1 | 22-01-2014 | AU 2013292031 A1 | 29-01-2015 |
| | | CN 104470373 A | 25-03-2015 |
| | | EP 2687103 A1 | 22-01-2014 |
| | | EP 2874507 A1 | 27-05-2015 |
| | | JP 2015530076 A | 15-10-2015 |
| | | WO 2014013002 A1 | 23-01-2014 |
| US 2003148099 A1 | 07-08-2003 | AT 447440 T | 15-11-2009 |
| | | AU 2003207707 A1 | 02-09-2003 |
| | | EP 1480736 A2 | 01-12-2004 |
| | | ES 2335581 T3 | 30-03-2010 |
| | | JP 4989017 B2 | 01-08-2012 |
| | | JP 2005517694 A | 16-06-2005 |
| | | JP 2012006943 A | 12-01-2012 |
| | | US 2003148099 A1 | 07-08-2003 |
| | | WO 03066205 A2 | 14-08-2003 |
| WO 2011039336 A1 | 07-04-2011 | CN 102573513 A | 11-07-2012 |
| | | EP 2482672 A1 | 08-08-2012 |
| | | US 2012259023 A1 | 11-10-2012 |
| | | WO 2011039336 A1 | 07-04-2011 |
| WO 2012059286 A1 | 10-05-2012 | CN 103188948 A | 03-07-2013 |
| | | EP 2635134 A1 | 11-09-2013 |
| | | JP 2013544240 A | 12-12-2013 |
| | | KR 20130125773 A | 19-11-2013 |
| | | US 2013281550 A1 | 24-10-2013 |
| | | WO 2012059286 A1 | 10-05-2012 |
| US 6500473 B1 | 31-12-2002 | AT 238696 T | 15-05-2003 |
| | | AU 772905 B2 | 13-05-2004 |
| | | AU 4744200 A | 12-12-2000 |
| | | DE 60002457 D1 | 05-06-2003 |
| | | DE 60002457 T2 | 06-05-2004 |
| | | DK 1178738 T3 | 16-06-2003 |
| | | EP 1178738 A1 | 13-02-2002 |
| | | ES 2199165 T3 | 16-02-2004 |
| | | JP 2003500035 A | 07-01-2003 |
| | | US 6500473 B1 | 31-12-2002 |
| | | WO 0070967 A1 | 30-11-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1049539 A
- GB 768172 A
- GB 756896 A
- GB 751573 A
- GB 744890 A
- WO 2008110225 A
- WO 2011039336 A


### Non-patent literature cited in the description


- Modified Starches: Properties and Uses. CRC Press, Inc, 1986